# EUROPÄISCHE PATENTSCHRIFT

(11) **EP 4 545 412 B1**
(45) Veröffentlichungstag und Bekanntmachung des Hinweises auf die Patenterteilung: **08.07.2026**
(21) Anmeldenummer: 23206111.9
(22) Anmeldetag: 26.10.2023
(51) Int. Cl.: B64D 11/04, A62C 3/08, B64D 37/32

(54) **SICHERHEITSBEHÄLTER ZUR AUFNAHME EINES BRENNENDEN BATTERIEBETRIEBENEN GEGENSTANDS, FLUGZEUGKÜCHE UND FLUGZEUG**
SAFETY CONTAINER FOR RECEIVING A BURNING BATTERY-POWERED ARTICLE, AIRCRAFT GALLEY, AND AIRCRAFT
RÉCIPIENT DE SÉCURITÉ DESTINÉ À RECEVOIR UN OBJET ALIMENTÉ PAR BATTERIE COMBUSTIBLE, CUISINE D'AÉRONEF ET AÉRONEF

(43) Veröffentlichungstag der Anmeldung: 30.04.2025
(73) Patentinhaber: Airbus Operations GmbH, 21129 Hamburg (DE)
(72) Erfinder: Prawinski, Gregor, 21129 Hamburg (DE)
(74) Vertreter: Airbus Germany

(56) Entgegenhaltungen:
- WO-A2-2013/020704
- CN-U- 212 695 248
- CN-U- 216 995 856
- DE-A1- 102012 213 054
- DE-A1- 102014 209 076
- DE-U1- 202015 106 958
- US-A1- 2017 361 139

## Beschreibung

Die vorliegende Erfindung betrifft einen Sicherheitsbehälter zur Aufnahme von wenigstens einem brennenden batteriebetriebenen Gegenstand, wobei der Sicherheitsbehälter luftdicht verschließbar und feuerfest ist. Ferner betrifft die vorliegende Anmeldung eine Flugzeugküche mit einem solchen Sicherheitsbehälter sowie ein Flugzeug mit einer solchen Flugzeugküche.

Vorliegend geht es speziell um eine sichere Handhabung von batteriebetriebenen Geräten, z.B. batteriebetriebenen Rollstühlen, aber vor allem "Personal Electronic Devices" (PEDs), wie z.B. Mobiltelefone, Laptops, Tablets, Smartwatches etc., bei denen z.B. bei Beschädigung der Batterie ein thermisches Durchgehen (engl.: "thermal runaway") möglich ist. Als thermal runaway wird die Überhitzung durch eine exotherme chemische Reaktion bezeichnet. PEDs können sich beispielsweise aufgrund ihrer Größe leicht zwischen Flugzeugsitzen verfangen und dadurch mechanisch beschädigt werden, so dass es zu einem thermal runaway kommt. Ursache für einen thermal runaway können aber auch allgemein elektrische und/oder mechanische Defekte im batteriebetriebenen Gerät oder in der Batterie selbst sein. Und auch ein Überladen der Batterie oder Überhitzung beim Betrieb und/oder beim Laden können einen thermal runaway bewirken. Die Tendenz dieser Vorfälle steigt laut Federal Aviation Administration (FAA), siehe beispielsweise https://www.faa.gov/hazmat/resources/lithium_batteries. Die Gefahr durch eine Überhitzung von PEDs wird auch bereits intensiv untersucht, siehe z.B. https://loki-ped.de/overview/. Eine solche Überhitzung und die damit verbundene Gefahr, dass ein PED zerberstet, ist vor allem in Flugzeugen groß, wo nur beschränkte Mittel zur Brandbekämpfung zur Verfügung stehen. Die IATA empfiehlt zur Brandbekämpfung zum einen die Feuerbekämpfung mit einem Feuerlöscher sowie die Kühlung des sich aufheizenden Geräts mit Wasser. Eine Übersicht über die Thematik findet sich beispielsweise auf https://safetyfirst.airbus.com/lithiumbatteries-safe-to-fly/. Grundsätzlich besteht der Wunsch, eine einfache und gleichzeitig sichere Handhabung für brennende PEDs bereitzustellen, die insbesondere eine sichere Alternative zu der Verwendung von Halon-Feuerlöschern darstellt (ab 2025 dürfen diese in der Europäischen Union nicht mehr eingesetzt werden).

Aus der DE 20 2019 103 451 U1 ist beispielsweise bekannt, dass (brennende) PEDs in eine feuerfeste Tasche gelegt werden. Ausströmender toxischer Rauch kann sich hier jedoch leicht in der Flugzeugkabine verteilen. Auch kann nur ein beschränkter Zeitraum bis zur (Not-)Landung überbrückt werden.

Aus der DE 10 2014 209 076 A1 ist ein Rollwagen (Flugzeugtrolley) bekannt, in dem ein brennendes elektronisches Gerät aufgenommen und der dann an eine Löschanlage angeschlossen werden kann. Ferner ist bei dieser Lösung optional eine Rauchgas-Abführleitung vorgesehen, die eine Auslasseinrichtung hat, die an einer Außenhaut eines Flugzeugs angeordnet ist, um die Dämpfe vom Brand selbst oder vom verwendeten Löschmittel abzulassen. Insbesondere schlägt die Anmeldung sogar eine Heizvorrichtung vor, die die Auslasseinrichtung eisfrei halten soll. Diese vorgeschlagene Lösung nimmt durch die Trolleygröße relativ viel Platz ein und ist durch die Anbindung der Absaugfunktion an die Außenhaut und die dadurch notwendige Enteisungsvorrichtung auch komplex.

Es ist deshalb Aufgabe der vorliegenden Erfindung, eine noch effizientere und gleichzeitig für die Crew leicht handhabbare Lösung zur Bekämpfung von Batteriebränden an Bord eines Flugzeugs (insbesondere im Passagierbereich) bereitzustellen.

Zur Lösung dieser Aufgabe dienen der Sicherheitsbehälter mit den Merkmalen von Patentanspruch 1, die Flugzeugküche mit den Merkmalen des Patentanspruchs 6 sowie das Flugzeug mit den Merkmalen des Anspruchs 8. Vorteilhafte Ausführungsformen sind Gegenstand der jeweiligen Unteransprüche.

Der erfindungsgemäße Sicherheitsbehälter zur Aufnahme von wenigstens einem brennenden batteriebetriebenen Gegenstand ist luftdicht verschließbar und feuerfest und hat wenigstens eine Rauchgas-Abführleitung. Der Sicherheitsbehälter ist vorzugsweise quaderförmig und hat eine vordere Seite, an der sich eine öffenbare Klappe oder Tür befindet. Hierbei ist durch ein Überdruckventil an einer Seite des Sicherheitsbehälters kontrolliert Rauchgas aus dem Sicherheitsbehälter in die wenigstens eine Rauchgas-Abführleitung ableitbar. Vorzugsweise ist das Überdruckventil auf der der öffenbaren vorderen Seite gegenüberliegenden Seite des Sicherheitsbehälters angeordnet, im Folgenden "Rückseite" genannt. Überschreitet der Druck einen bestimmten Wert, öffnet sich das Überdruckventil auf mechanische Weise für einen bestimmten Zeitraum. Dies ist natürlich auch über eine elektronische Steuerung möglich, die bei einem bestimmten Druck, der über einen Drucksensor erfasst wird, das Überdruckventil öffnet und es - wenn der Druck auf einen weiteren bestimmten Wert gefallen ist - wieder schließt. Es ist auch denkbar, dass der Sicherheitsbehälter ferner einen Temperatursensor im Inneren hat, so dass außerhalb des Behälters dargestellt werden kann, wie heiß es (noch) im Inneren ist. Eine solche Anzeige kann digital und/oder durch farbige LEDs erfolgen (z.B. grün = Normalzustand; orange = größer als Normalzustand und kleiner als bestimmter Wert X°C; rot = höher als ein bestimmter Wert X°C). Ferner sorgen Kühlvorrichtungen, die am Sicherheitsbehälter angeordnet sind, für eine Kühlung des toxischen Rauchgases, wenn es den Sicherheitsbehälter (im eingebauten Zustand in einer Flugzeugküche in Richtung vorhandener Abführleitungen ("DUCTs")) verlässt. Eine solche Kühlung ist vor allem dann sinnvoll, wenn das durch den thermal runaway so stark erhitzte Gas noch nicht direkt in ein Lüftungssystem eingespeist werden kann, ohne es durch die Hitze zu beschädigen. Natürlich ist grundsätzlich auch eine Ausführungsform denkbar, bei der das Überdruckventil mechanisch funktioniert (also keinen elektronischen Drucksensor aufweist) und der Sicherheitsbehälter über einen Temperatursensor verfügt.

Diese Kühlvorrichtungen sind erfindungsgemäß engmaschige Kühlleitungen und/oder Kühlrippen mit einer hohen Wärmeleitzahl. Die optionalen Kühlrippen verstärken die Wärmeabfuhr.

Vorzugsweise sind die Kühlvorrichtungen aus Kupfer, da es eine gute Wärmeleitfähigkeit hat (380-400 W/mK).

Der erfindungsgemäße Sicherheitsbehälter (inklusive der an ihm befestigten Kühlvorrichtungen) ist speziell bevorzugt ein sogenannter Flugzeugkücheneinschub, "Galley Insert" ("GAIN") genannt, gemäß den Abmessungen des ARINC Standards 810. Dies hat den Vorteil, dass der Sicherheitsbehälter platzeffizient und an mehreren Stellen (gemäß Wunsch der Airline) in ein bestehendes Monument (der Galley) einer Flugzeugkabine eingefügt werden kann. Natürlich könnte ein Sicherheitsbehälter alternativ grundsätzlich auch fest in der Galley verbaut sein, also integral mit dem Flugzeugküchenmonument ausgestaltet sein. Dies hat allerdings den ökonomischen und ökologischen Nachteil, dass ein schadhafter Sicherheitsbehälter bewirkt, dass das gesamte Flugzeugmonument ausgetauscht werden müsste. Diese Option ist also nur dann sinnvoll, wenn der Sicherheitsbehälter sehr groß ist, um beispielsweise einen ganzen batteriebetriebenen Rollstuhl zu lagern. Letztlich ist es jedoch die Airline, die über eine gewünschte Ausführungsform entscheidet. Speziell im Hinblick auf batteriebetriebene Rollstühle ist es hierbei sinnvoll, die brennende Batterie vom Rollstuhl zu trennen und sie separat in dem erfindungsgemäßen Sicherheitsbehälter unterzubringen. Speziell bevorzugt hat der Sicherheitsbehälter die äußeren Abmessungen eines GAINs mit ARINC "Size 4". Durch die geringe Größe und das geringe Gewicht des Behälters ist eine hohe Variabilität für die Anordnung eines erfindungsgemäßen Sicherheitsbehälters in einer Flugzeugküche gegeben und es geht kaum Platz für andere Galley Inserts (z.B. Stauraum, Ofen, Kaffeemaschine etc.) verloren, wenn der Sicherheitsbehälter in einer Flugzeugküche angeordnet wird.

In einer bevorzugten Ausführungsform umfasst der erfindungsgemäße Sicherheitsbehälter ferner wenigstens eine induktive Ladestation. Speziell bevorzugt bildet ein Boden des Sicherheitsbehälters die induktive Ladestation. Auf diese Weise dient der Sicherheitsbehälter, wenn keine Aufbewahrung für ein brennendes batteriebetriebenes Gerät benötigt wird, einer effizienten und sicheren Platznutzung für beispielsweise batteriebetriebene Crew-Geräte, also sogenannten "wearable devices" für das Flugpersonal, die für den operativen Ablauf in der Kabine bei Start, Flug und Landung verwendet werden, wie beispielsweise einem Tablet für Kabinensteuerungsfunktionen. Die Crew-Geräte können demnach in dem Sicherheitsbehälter aufgeladen werden. Hierfür können beispielsweise rutschfeste Matten und/oder Einlegematten mit Ausnehmungen in Größe von Crew-Geräten in dem Sicherheitsbehälter angeordnet sein, auf bzw. in die die Crew-Geräte gelegt werden können. Die induktive Ladung hat gegenüber dem kabelgebundenen Aufladen für den Sicherheitsbehälter den Vorteil, dass keine Durchlässe zum Einbringen von Ladekabel notwendig sind, durch die - im Brandfall - Rauchgase entweichen können.

Die erfindungsgemäße Flugzeugküche umfasst einen wie zuvor beschriebenen Sicherheitsbehälter. Auf diese Weise ist der Sicherheitsbehälter platzeffizient und sicher verstaut, jedoch gleichzeitig in einem Brandfall gut durch eine Flugzeugcrew erreichbar.

Optional umfasst die erfindungsgemäße Flugzeugküche mit dem hier vorgeschlagenen Sicherheitsbehälter wenigstens eine Wasserleitung, die derart in räumlicher Nähe zu der wenigstens einen Rauchgas-Abführleitung angeordnet ist, dass sie als zusätzliche Kühlvorrichtung für das Rauchgas nach und/oder beim Verlassen des Sicherheitsbehälters dient.

Das erfindungsgemäße Flugzeug mit einer wie oben vorgeschlagenen Flugzeugküche weist ein Flugzeugentlüftungssystem auf, wobei die wenigstens eine Rauchgas-Abführleitung an das Flugzeugentlüftungssystem gekoppelt wird, so dass das toxische Rauchgas über das Flugzeugentlüftungssystem weiter durch das sogenannte Outflow-Valve (im hinteren ("AFT") Bereich des Flugzeugs installiert, d.h. am zur Flugrichtung entgegengesetzten Ende des Flugzeugs) sicher aus dem Flugzeug entweichen kann. Auf diese Weise werden bestehende Rohre verwendet und das vorgeschlagene System aus einem Sicherheitsbehälter und einer Flugzeugküche, die in einem Flugzeug angeordnet ist, sorgt nicht für eine große zusätzliche Gewichtsbelastung für das Gesamtgewicht des Flugzeugs.

Die Flugzeugküche ist bevorzugt im AFT, dem hinteren Bereich des Flugzeugs angeordnet. Vorteilhafterweise können dort (im Vergleich zu einer Flugzeugküche, die sich im mittleren Bereich eines Flugzeugs befindet) die giftigen Rauchgase auf kürzestem Wege über das Flugzeugentlüftungssystem nach außen aus dem Flugzeug herausgeführt werden.

Auch denkbar ist, dass das Flugzeugentlüftungssystem des vorgeschlagenen Flugzeugs mit einer erfindungsgemäßen Flugzeugküche inklusive dem Sicherheitsbehälter ein Toilettenabsaugsystem ist. Hier gibt es einen Separator, der die Feststoffe von den Gasen trennt: Die Feststoffe werden im Aircraft Waste-Tank gesammelt und die Gase werden nach außen abgeleitet. Hier erfolgt eine Absaugung des Rauchgases aus dem Flugzeug mittels Unterdrucks.

Bevorzugt würde man bei dieser Variante das Absaugsystem einer Toilette ("Lavatory") im hinteren Bereich des Flugzeugs wählen.

Die Erfindung wird im Folgenden unter Bezugnahme auf die Zeichnungen erläutert.
Figur 1 zeigt schematisch die Rückseite eines erfindungsgemäßen Sicherheitsbehälters mit Kühlelementen.
Figur 2 zeigt eine Galley für den AFT-Bereich eines Flugzeugs.
Figur 3 zeigt ein Flugzeug mit nur schematisch dargestellter erfindungsgemäßer Flugzeugküche im AFT-Bereich.

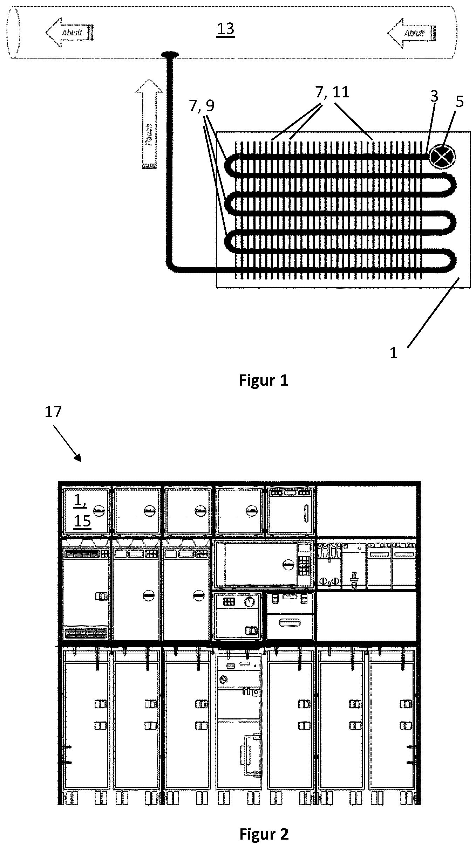

In Figur 1 ist die Rückseite eines erfindungsgemäßen Sicherheitsbehälters 1 zu sehen. Er dient zur Aufnahme von wenigstens einem brennenden batteriebetriebenen Gegenstand, insbesondere "Personal Electronic Devices" (PEDs) von Passagieren, wie z.B. Mobiltelefone, Laptops, Tablets, Smartwatches etc. Der Sicherheitsbehälter 1 ist luftdicht verschließbar und feuerfest. Ein mögliches Material für eine feuerfeste Beschichtung könnte beispielsweise Glimmer (Mica) oder Keramik sein.

Der Sicherheitsbehälter 1 hat eine Rauchgas-Abführleitung 3, wobei durch ein Überdruckventil 5 an einer Seite des Sicherheitsbehälters 1 kontrolliert Rauchgas aus dem Sicherheitsbehälter in die wenigstens eine Rauchgas-Abführleitung 3 ableitbar ist. Hier kann optional ein nicht dargestellter Temperatur- und/oder Drucksensor im Sicherheitsbehälter 1 vorhanden sein, der dem Flugzeugpersonal einen Hinweis dafür bietet, wie heiß der Behälter bzw. das entweichende toxische Rauchgas noch ist.

Ferner erkennt man in Figur 1 Kühlvorrichtungen 7, die zum Kühlen des Rauchgases beim Verlassen des Sicherheitsbehälters 1 am Sicherheitsbehälter 1 angeordnet sind. Dargestellt sind die Kühlvorrichtungen 7 als engmaschig gewundene Rauchgas-Abführleitungen (im Folgenden auch Kühlleitungen 9 genannt) und Kühlrippen 11, so dass das heiße Rauchgas wegen der hohen Wärmeleitzahl des Kühlvorrichtungsmaterials soweit heruntergekühlt wird, dass es in ein Lüftungssystem 13 eines Flugzeugs eingeleitet werden kann. Bevorzugt ist der Sicherheitsbehälter 1 ein sogenannter Galley Insert 15, kurz "GAIN". Hierbei handelt es sich um standardisierte Behälter zum Einsetzen in eine Flugzeugküche 17, wie in Figur 2 zu sehen. Es gibt GAINs in verschiedenen Größenordnungen, so dass die Aufbewahrung von unterschiedlich großen bzw. unterschiedlich vielen brennenden elektronischen Geräten möglich ist. Dargestellt ist das GAIN 15 in der ARINC-Größe 4 (Breite 312,4 mm x Höhe 286 mm), die der Airline die größte Flexibilität im Hinblick auf die Anordnung der übrigen GAINs bietet. Vorzugsweise ist die erfindungsgemäße Flugzeugküche 17 im hinteren Bereich des Flugzeugs angeordnet, da dort üblicherweise in räumlicher Nähe auch ein Auslassventil ("Outflow Valve") des Flugzeugbelüftungssystems angeordnet ist, so dass eine platz- und gewichtssparende Installation einer erfindungsgemäßen Flugzeugküche 17 mit Sicherheitsbehälter 1 realisierbar ist. Auf diese Weise kann Rauchgas aus dem GAIN 15 schnell und sicher abgeleitet werden und aus dem Flugzeug entweichen.

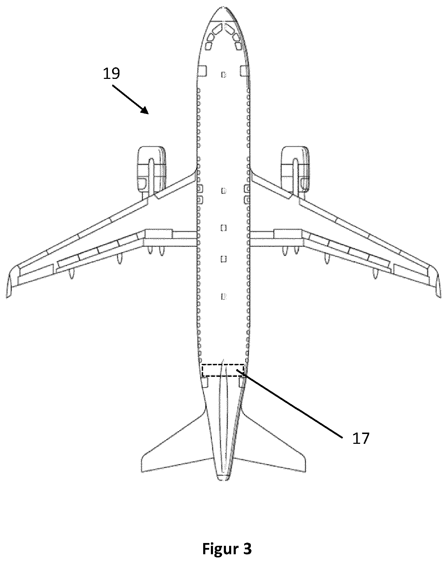

Schlussendlich zeigt Figur 3 ein Flugzeug 19 mit einer schematisch eingezeichneten erfindungsgemäßen Flugzeugküche 17, die im hinteren Bereich des Flugzeugs (AFT) angeordnet ist, so dass Rauchgas schnell in bestehende Abluftsysteme eingespeist und somit aus dem Flugzeug 19 entweichen kann.

## Patentansprüche

1. Sicherheitsbehälter (1) zur Aufnahme von wenigstens einem brennenden batteriebetriebenen Gegenstand, wobei der Sicherheitsbehälter (1) luftdicht verschließbar und feuerfest ist, wobei der Sicherheitsbehälter (1) wenigstens eine Rauchgas-Abführleitung (3) hat, wobei durch ein Überdruckventil (5) an einer Seite des Sicherheitsbehälters (1) kontrolliert Rauchgas aus dem Sicherheitsbehälter (1) in die wenigstens eine Rauchgas-Abführleitung (3) ableitbar ist, **dadurch gekennzeichnet, dass** Kühlvorrichtungen (7, 9, 11) zum Kühlen des Rauchgases beim Verlassen des Sicherheitsbehälters (1) am Sicherheitsbehälter (1) angeordnet sind.

2. Sicherheitsbehälter (1) nach Anspruch 1, wobei die Kühlvorrichtungen (7) engmaschige Kühlleitungen (9) und/oder Kühlrippen (11) mit einer hohen Wärmeleitzahl sind.

3. Sicherheitsbehälter (1) nach einem der vorherigen Ansprüche, wobei die Kühlvorrichtungen aus Kupfer sind.

4. Sicherheitsbehälter (1) nach einem der vorherigen Ansprüche, wobei der Sicherheitsbehälter ein GAIN (15) ist.

5. Sicherheitsbehälter (1) nach einem der vorherigen Ansprüche, ferner umfassend wenigstens eine induktive Ladestation.

6. Flugzeugküche (17) mit einem Sicherheitsbehälter (1) nach einem der Ansprüche 1 bis 5.

7. Flugzeugküche (17) nach Anspruch 6, wobei die Flugzeugküche (17) wenigstens eine Wasserleitung umfasst, die derart in räumlicher Nähe zu der wenigstens einen Rauchgas-Abführleitung (3) angeordnet ist, dass sie als zusätzliche Kühlvorrichtung (7) für das Rauchgas nach Verlassen des Sicherheitsbehälters (1) dient.

8. Flugzeug (19) mit einer Flugzeugküche (17) nach Anspruch 5, wobei die wenigstens eine Rauchgas-Abführleitung (3) an ein Flugzeugentlüftungssystem (13) gekoppelt ist, so dass das Rauchgas aus dem Flugzeug (19) entweichen kann.

9. Flugzeug (19) mit einer Flugzeugküche (17) nach Anspruch 5 oder 6, wobei die Flugzeugküche (17) in einem hinteren Bereich des Flugzeugs (19) angeordnet ist.

10. Flugzeug (19) nach Anspruch 8 oder 9, wobei das Flugzeugentlüftungssystem (13) an ein Toilettenabsaugsystem gekoppelt ist.

## Claims

1. Safety container (1) for receiving at least one burning battery-operated object, wherein the safety container (1) is airtightly sealable and fireproof, wherein the safety container (1) has at least one flue gas discharge line (3), wherein flue gas can be discharged in a controlled manner from the safety container (1) into the at least one flue gas discharge line (3) by means of a pressure relief valve (5) on one side of the safety container (1), **characterized in that** cooling devices (7, 9, 11) for cooling the flue gas when leaving the safety container (1) are arranged on the safety container (1).

2. Safety container (1) according to claim 1, wherein the cooling devices (7) are close-meshed cooling lines (9) and/or cooling fins (11) with a high thermal conductivity.

3. Safety container (1) according to any one of the preceding claims, wherein the cooling devices are made of copper.

4. Safety container (1) according to any one of the preceding claims, wherein the safety container is a GAIN (15).

5. Safety container (1) according to any one of the preceding claims, further comprising at least one inductive charging station.

6. Galley (17) comprising a safety container (1) according to any one of claims 1 to 5.

7. Galley (17) according to claim 6, wherein the galley (17) comprises at least one water line which is arranged in such spatial proximity to the at least one flue gas discharge line (3) that it serves as an additional cooling device (7) for the flue gas after leaving the safety container (1).

8. Aircraft (19) comprising a galley (17) according to claim 5, wherein the at least one flue gas discharge line (3) is coupled to an aircraft venting system (13) so that the flue gas can escape from the aircraft (19).

9. Aircraft (19) comprising a galley (17) according to claim 5 or 6, wherein the galley (17) is arranged in a rear region of the aircraft (19).

10. Aircraft (19) according to claim 8 or 9, wherein the aircraft venting system (13) is coupled to a toilet extraction system.

## Revendications

1. Récipient de sécurité (1) pour recevoir au moins un objet brûlant fonctionnant sur batterie, le récipient de sécurité (1) pouvant être fermé de manière étanche à l'air et étant résistant au feu, le récipient de sécurité (1) ayant au moins une conduite d'évacuation de gaz de fumée (3), du gaz de fumée pouvant être évacué de manière contrôlée depuis le récipient de sécurité (1) dans la au moins une conduite d'évacuation de gaz de fumée (3) par une soupape de surpression (5) sur un côté du récipient de sécurité (1), **caractérisé en ce que** des dispositifs de refroidissement (7, 9, 11) pour refroidir le gaz de fumée lorsqu'il quitte le récipient de sécurité (1) sont disposés sur le récipient de sécurité (1).

2. Récipient de sécurité (1) selon la revendication 1, dans lequel les dispositifs de refroidissement (7) sont des conduites de refroidissement (9) à mailles serrées et/ou des ailettes de refroidissement (11) ayant un coefficient de conductivité thermique élevé.

3. Récipient de sécurité (1) selon l'une des revendications précédentes, dans lequel les dispositifs de refroidissement sont en cuivre.

4. Récipient de sécurité (1) selon l'une des revendications précédentes, dans lequel le récipient de sécurité est un GAIN (15).

5. Récipient de sécurité (1) selon l'une des revendications précédentes, comprenant en outre au moins une station de charge inductive.

6. Cuisine de bord d'aéronef (17) avec un récipient de sécurité (1) selon l'une des revendications 1 à 5.

7. Cuisine de bord d'aéronef (17) selon la revendication 6, dans laquelle la cuisine de bord d'aéronef (17) comprend au moins une conduite d'eau qui est disposée à une proximité spatiale telle de la au moins une conduite d'évacuation de gaz de fumée (3) qu'elle sert de dispositif de refroidissement (7) supplémentaire pour le gaz de fumée après qu'il a quitté le récipient de sécurité (1).

8. Aéronef (19) avec une cuisine de bord d'aéronef (17) selon la revendication 5, dans lequel la au moins une conduite d'évacuation de gaz de fumée (3) est couplée à un système de ventilation d'aéronef (13), de sorte que le gaz de fumée peut s'échapper de l'aéronef (19).

9. Aéronef (19) avec une cuisine de bord d'aéronef (17) selon la revendication 5 ou 6, dans lequel la cuisine de bord d'aéronef (17) est disposée dans une zone arrière de l'aéronef (19).

10. Aéronef (19) selon la revendication 8 ou 9, dans lequel le système de ventilation d'aéronef (13) est couplé à un système d'aspiration de toilettes.
